# EUROPÄISCHE PATENTSCHRIFT

(11) **EP 1 704 395 B1**
(45) Veröffentlichungstag und Bekanntmachung des Hinweises auf die Patenterteilung: **06.06.2007**
(21) Anmeldenummer: 05700919.3
(22) Anmeldetag: 14.01.2005
(51) Int. Cl.: G01J 3/46

(54) **VERFAHREN ZUR BESTIMMUNG DER FARBWAHRNEHMUNG BEI MEHRSCHICHTSYSTEMEN**
METHOD FOR DETERMINING COLOUR PERCEPTION IN MULTI-LAYER SYSTEMS
PROCEDE POUR DETERMINER LA PERCEPTION DES COULEURS DE SYSTEMES MULTICOUCHES

(30) Priorität: 14.01.2004 DE 102004002929
(43) Veröffentlichungstag der Anmeldung: 27.09.2006
(73) Patentinhaber: DeguDent GmbH, 63457 Hanau-Wolfgang (DE)
(72) Erfinder: Dr. POVEL, Kirsten, 22529 Hamburg (DE); CAPPIUS, Hans-Joachim, 10551 Berlin (DE); MÜLLER, Gerhard, 14129 Berlin (DE)
(74) Vertreter: Stoffregen, Hans-Herbert
(86) Internationale Anmeldenummer: PCT/EP2005/000319
(87) Internationale Veröffentlichungsnummer: WO 2005/068953

(56) Entgegenhaltungen:
- DE-A1- 19 652 885
- US-A- 5 717 605
- US-A1- 2003 223 060
- SHIMADA M ET AL: "Melanin and blood concentration in a human skin model studied by multiple regression analysis: Assessment by Monte Carlo simulation" PHYSICS IN MEDICINE AND BIOLOGY, Bd. 46, Nr. 9, September 2001 (2001-09), Seiten 2397-2406, XP002325296 ISSN: 0031-9155

## Beschreibung

Die Erfindung bezieht sich auf Verfahren zur Bestimmung der Farbwirkung von streuenden Materialien, wie Werkstoffen oder biologischen Substanzen eines Mehrschichtsystems, insbesondere einer Schichtabfolge in Zähnen oder dentalen Werkstoffen, wobei die Remission des Mehrschichtsystems durch Vorwäts-Monte-Carlo-Simulation von durch inverse Monte-Carlo-Simulation berechneten intrinsischen optischen Parametern Streukoeffizient µₛ, Anisotropiefaktor g und Absorptionskoeffizient der unterschiedlichen Materialien unter Berücksichtigung von Brechungsindex n, Dicke d der jeweiligen Schicht der Materialien sowie Streuphasenfunktion der einzelnen Materialien berechnet und aus der Remission die Farbwirkung ermittelt wird.

Ein Ziel der Bestimmung der Farbwahmehmung ist eine Anpassung oder ein Abgleich der Farbwirkung von neuen Mehrschichtsystemen an vorhandene Mehrschichtsysteme, beispielsweise als Maßnahme der Qualitätssicherung oder bei der Entwicklung und Beurteilung neuer Materialien und deren Kombinationen. Dies gilt für Mehrschichtsysteme im Bereich von kosmetischen oder ästhetischen medizinischen Anwendungen, wie z. B. für Zahnersatz, bis hin zu technischen Gebieten, wie z. B. für Autolacke oder Kunststoffe. Die Farbwirkung eines Materialsystems ist abhängig von der Schichtdicke und der Rückstreuung (Remission) des Lichts und kann gemäß DIN 5033 nach dem Gleichheits-, Dreibereichs- oder Spektralverfahren nach unterschiedlichen Farbsystemen, wie z. B. CIELAB oder CIELUV, ermittelt werden. Genutzt werden beispielsweise Messgeräte wie Farbspektrometer oder Colorimeter sowie eine visuelle Abmusterung beispielsweise mittels spezieller Farbskalen, wie diese z. B. für den Bereich Zahnmedizin in der DE-A-196 46 923, der DE-A-101 21 553 oder der DE-A-100 23 840 beschrieben werden.

Aufgrund des bei Mehrschichtsystemen durchzuführenden technischen Herstellungs-prozesses sowie der Kombination von Einzelschichten kann die Farbwirkung nicht direkt verglichen, sondern erst im Nachhinein, also nach Fertigstellung bestimmt und beurteilt werden, wenn keine Farbkorrektur mehr möglich ist.

Um eine gewünschte Farbwirkung zu erreichen und die jeweilige Farbwirkung bei variierenden Schichtdicken zu bestimmen oder vorauszusagen, sind daher meist zeit- und kostenaufwändige Mess- und Versuchsreihen seitens des Herstellers erforderlich, auch nach dem Prinzip trial und error. Um dies zu vermeiden, wird versucht, die Farbwirkung mit Hilfe von Simulationen zu berechnen. Dies kann für Einzelschichten und weniger komplexe Materialsysteme, die aufgrund ihrer als relativ homogen anzusehenden inneren Struktur nur eine molekulare Streuung aufweisen, mit ausreichender Genauigkeit durchgeführt werden.

Eine solche Berechnung zur Vorhersage der Farbwirkung für unterschiedliche Schichtdicken wird - sowohl auf dem Gebiet der zahnmedizinischen Wissenschaft als auch im technischen Bereich wie in der Farbindustrie als Basis von, beispielsweise konzentrationsabhängigen, Farbrezeptierungsberechnungen - bisher mit Hilfe der als Stand der Technik geltenden und verwendeten Kubelka-Munk-Gleichung als eindimensionalem Modell zur Lösung der Strahlungstransportgleichung durchgeführt. Aus an Materialproben gemessenen Transmissions- oder Remissionseigenschaften werden damit der Absorptionskoeffizient A_{KM} und Streukoeffizient S_{KM} berechnet. Auf Basis von A_{KM} und S_{KM} können die Remissionsspektren für verschiedene Schichtdicken vorhergesagt werden, beispielsweise vor weißem oder schwarzem oder vor nach einem Farbsystem definiertem Hintergrund. Aus den Remissionsspektren lässt sich die Farbwirkung je nach angewendetem Farbsystem berechnen. Beispielsweise kann die Berechnung der Farbwirkung nach CIELAB nach der Norm DIN 5033 durch Umrechung der Remissionswerte in X, Y, Z-Normfarbwerte und nachfolgend in CIELAB-Werte ermittelt werden. Diese Umrechnung von gemessenen Remissionswerten in CIELAB-Werte ist auch in die Software von Farbspektrometern, wie sie in der Farbindustrie angewendet werden, integriert. Durch Vergleich der CIELAB-Werte und Berechnung des Farbabstands ΔE_{ab} nach DIN-Norm 6074 können Farbunterschiede zwischen Proben der untersuchten Materialien ermittelt werden.

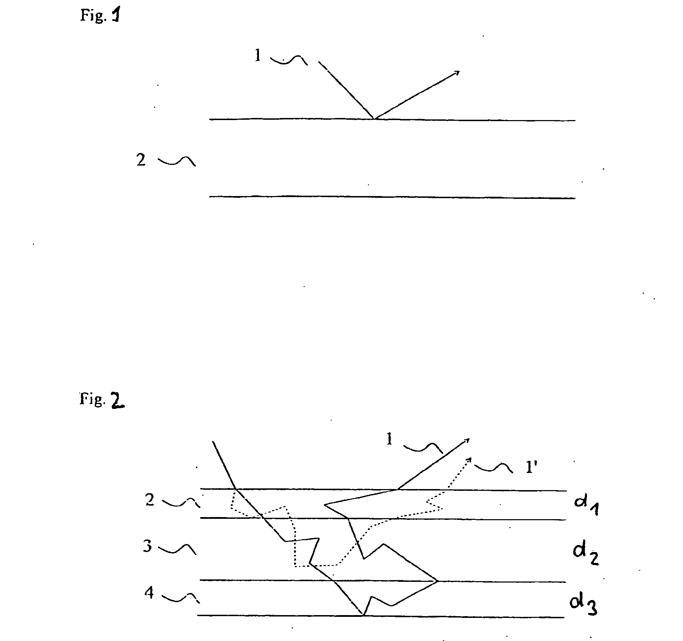

Mit der Kubelka-Munk-Gleichung können jedoch die Messgeometrien der für die Transmissions- oder Remissionsmessungen verwendeten Messgeräte nicht berücksichtigt werden und es werden vereinfachende, der Genauigkeit abträgliche, Annahmen getroffen. Damit entstehen systematische Fehler, die sich in sichtbaren Farbunterschieden zwischen Simulationsergebnis und Wirklichkeit bemerkbar machen können. Der größte Nachteil der Kubelka-Munk-Theorie besteht jedoch darin, dass nur Vorgänge der Oberflächenreflexion berücksichtigt werden können. Dies wird in Fig. 1 beispielhaft am Lichtweg eines Photons 1 nach Reflexion des Lichts an der Oberfläche einer Materialschicht 2 vorgegebener Dicke dargestellt ist.

Mit der Kubelka-Munk-Gleichung können bei Mehrschichtsystemen, bei denen nicht molekulare, sondern strukturelle Streugeometrien vorliegen, die tatsächlich vorliegenden Verhältnisse nicht mehr korrekt wiedergegeben werden. Denn hierbei kommt es durch den Schichtaufbau und die Strukturbesonderheiten zu einer Lichtausbreitung mit internen Vielfachstreuvorgängen im Material oder Werkstoff. Die Remission und damit die Farbwirkung ergeben sich aus einem sehr komplexen Zusammenspiel der optischen Eigenschaften der unterschiedlichen Inhaltsstoffe und Komponenten der Schichten aufgrund der Lichtausbreitung durch Streuung, Absorption und Brechung an Grenzschichten. Fig. 2 zeigt beispielhaft den Lichtweg eines Photons 1 sowie einen alternativen Lichtweg 1' nach multiplen Streuereignissen innerhalb mehrerer hintereinander liegender Materialschichten 2, 3, 4 unterschiedlicher Dicke und Art. Bei Anwendung der Kubelka-Munk-Gleichung sind daher für Mehrschichtsysteme mit Strukturstreuung wesentliche Abstriche bei der Genauigkeit der Vorhersage der Remission und somit der Farbwirkung hinzunehmen, die sich als visuell wahrnehmbare Unterschiede bemerkbar machen. Zur Verbesserung der Vorhersagegenauigkeit der Remission und damit der Farbwirkung ist daher die Entwicklung eines Verfahrens erforderlich, das diese strukturell bedingte Vielfachstreuung korrekt und genau berücksichtigen kann.

Ein Verfahren der eingangs genannten Art ist der Literaturstelle GB.Z.: PHYSICS IN MEDICINE AND BIOLOGY, Band .46, Nr. 9. September 2001, S. 2397 - 2406, Shimada M. et al. "Melanin and blood concentration in a human skin model studied by multiple regression analysis: assessment by Monte Carlo simulation" zu entnehmen.

Die Farbwirkung eines Mehrschichtsystems mittels Monte-Carlo-Simulationen wird auch nach der US-A-2003/0223060 bestimmt Dabei interessiert vorrangig die Farbwirkung von Mehrschichtsystemen bei Farben, Textilien oder in der kosmetischen Industrie.

Der vorliegenden Erfindung liegt die Aufgabe zu Grunde, dass die Farbwahrnehmung für Mehrschichtsysteme aus Kombinationen verschiedener streuender Werkstoffe oder biologischer Materialien aus zusammengesetzten, unterschiedlichen Schichten mit verschiedenen optischen Eigenschaften für variierende Schichtdicken genauer als bisher berechnet und damit vorhergesagt werden kann, ohne jeweils immer wieder Proben, bestehend aus den kombinierten interessierenden Schichtdicken, herstellen und deren Farbwirkung, beispielsweise in konventionellen Farbspektralphotometern, messen zu müssen.

Insbesondere soll die Farbwahrnehmung für Mehrschichtsysteme im dentalen Bereich berechnet bzw. vorhergesagt werden, wobei Schichtabfolgen in Zähnen wie Schmelz und Dentin in beliebiger Schichtstärke und dentale Werkstoffe wie Komposits und Keramiken von besonderem Interesse sind.

Zur Lösung der Aufgabe sieht die Erfindung im Wesentlichen vor, dass zunächst die intrinsischen Parameter Streukoeffizient µₛ, Anisotropiefaktor g und Absorptionskoeffizient des jeweiligen Materials unter Zugrundelegung einer Transmission von Licht ermöglichenden Schichtdicke des Materials berechnet werden und sodann durch inverse Monte-Carlo-Simulation ein korrigierter Absorptionskoeffizient µₐₖ unter Zugrundelegung der Remission des jeweiligen Materials einer optisch dichten Schicht einer Dicke d_{D} berechnet wird, wobei der korrigierte Absorptionskoeffizient µₐₖ als der Absorptionskoeffizient der Berechnung der Remission und der Farbwirkung des Mehrschichtsystems zu Grunde gelegt wird.

Dabei können die intrinsischen optischen Parameter auf Basis von spektrometrischen Messungen ermittelt oder aus einer Datenbank entnommen werden.

Erfindungsgemäß wird ein Verfahren vorgeschlagen, mit dem die visuelle Wahrnehmung der Farbe von Mehrschichtsystemen oder die Ergebnisse deren messtechnischer Erfassung, wie beispielsweise durch Farbspektrometer, ausreichend genau bestimmt bzw. vorhergesagt werden können. Es hat sich überraschenderweise gezeigt, dass bei Vorliegen von strukturellen Streugeometrien in Mehrschichtsystemen mit Simulationsrechnungen nach dem Prinzip der Monte-Carlo-Simulation als dreidimensionalem Lösungsansatz der Strahlungstransportgleichung und eines anschließenden speziellen Korrekturverfahrens eine korrekte und wesentlich genauere Bestimmung der Farbwahmehmung als bisher möglich ist.

Als Ausgangsdaten für die erfindungsgemäße Lösung dienen die optischen Eigenschaften der jeweiligen im Mehrschichtsystem enthaltenen Werkstoffe oder biologischen Materialien in Form der intrinsischen optischen Parameter Absorptionskoeffizient µₐ, Streukoeffizient µₛ und Anisotropiefaktor g.

Zur Ermittlung der intrinsischen optischen Parameter - auch bezeichnet als mikroskopische Parameter -, die unabhängig von der Materialdicke sind, können Verfahren zur Anwendung gelangen, die aus der Gewebeoptik für Dosimetrieberechnungen bei medizinischen Lasertherapien bekannt sind. So kann mit Hilfe einer inversen Monte-Carlo-Simulation aus den in einem Ulbricht-Kugel-Spektrometer an Proben mit einer zuvor ermittelten geeigneten Probendicke d gemessenen makroskopischen optischen Parametern wie der diffusen Remission R_{d}, der totalen Transmission Tₜ sowie der diffusen Transmission T_{d} oder der kollimierten Transmission T_{c} eine Berechnung erfolgen.

Insbesondere ist vorgesehen, dass die intrinsischen optischen Parameter Streukoeffizient µₛ, (unkorrigierter) Absorptioinskoeffizient µₐ sowie Anisotropiefaktor g eines Materials auf der Basis der makroskopischen optischen Parameter des Materials in Form von insbesondere diffuser Remission R_{d}, diffuser Transmission T_{d} und/oder totaler Transmission T, und/oder kollimierter Transmission T_{c} unter Berücksichtigung der Streuphasenfunktion des Materials, Dicke d einer bei der Bestimmung der makroskopischen Parameter verwendeten Schicht des Materials und Brechungsindex n des Materials mittels inverser Monte-Carlo-Simulation berechnet werden.

Sodann wird für jedes Material auf der Basis der beiden intrinsischen optischen Parameter Streukoeffizient µₛ und Anisotropiefaktor g sowie der Remission einer aus dem Material bestehenden optisch dichten Schicht einer Dicke d_{D} und unter Berücksichtigung zumindest der Dicke d_{D}, der Streuphasenfunktion und des Brechungsindex n des Materials mittels inverser Monte-Carlo-Simulation der korrigierte Absorptionskoeffizient µₐₖ berechnet. Der Streukoeffizient µₛ sowie der Anisotropiefaktor g sind bereits aus zuvor erfolgter Berechnung bekannt.

Mit anderen Worten erfolgt erfindungsgemäß eine Korrektur des berechneten Absorptionskoeffizients µₐ mit Hilfe der Remissonswerte einer optisch dichteren Probe der Probendicke d_{D} des zu untersuchenden Materials zusammen mit den ermittelten Werten von µₛ und g in einer erneuten inversen Monte-Carlo-Simulation zum korrigierten Absorptionskoeffizient µₐₖ. Durch diesen Schritt wird die Genauigkeit der Berechnung der Farbwirkung wesentlich erhöht.

Die Absorption kann umso genauer bestimmt werden, je größer die Dicke einer Schicht ist. Für die Bestimmung der Ausgangsdaten µₐ, µₛ und g kann jedoch bei der spektrometrischen Messung keine optisch dichte Probe verwendet werden, da für diesen Simulationsvorgang ein gewisser Prozentsatz an kollimierter Transmission, also Lichtdurchlässigkeit, erforderlich ist.

Die Daten zu den intrinsischen optischen Parametern können in Erweiterung des Erfindungsgedankens materialabhängig in einer Datenbank bereitgestellt werden. Mit dem Aufbau einer solchen Datenbank, die die intrinsischen optischen Parameter µₐₖ, µₛ und g für unterschiedliche Materialien oder biologische Substanzen oder dentale Materialien enthält, kann auf diese Werte zurückgegriffen werden, so dass bei Verwendung dieser Materialien in einem Mehrschichtsystem für die Bestimmung von dessen Farbwirkung keine spektrometrischen Messungen mehr erforderlich sind.

Nachfolgend lassen sich auf der Basis von µₐₖ, µₛ, und g durch eine Vorwärts-Monte-Carlo-Simulation die Remission für ein Mehrschichtsystem bei einer wählbaren Wellenlänge und jeweils wählbaren Dicken der im Mehrschichtsystem enthaltenen Schichten berechnen. Anstelle der Remission ist auch die Berechnung der Transmission möglich. Die wellenlängenabhängigen Werte der Remission können mittels geeigneter Algorithmen in Farbwerte wie z. B. die Koordinaten nach CIELAB oder anderer Farbsysteme transformiert werden. Möglich ist auch die Anwendung der Multifaktorenanalyse zur Ermittlung der Farbwirkung nach neuen, alternativen Farbsystemen.

Die Berechnung der Farbwirkung ist außerdem für unterschiedliche und frei wählbare Messgeometrien möglich.

Mit dem beschriebenen Vorgehen kann damit die Farbwirkung für ein Mehrschichtsystem als Kombination von verschiedenen Materialien wie biologische Materialien oder insbesondere zahnmedizinische oder -technische Schichtabfolgen für variierende Schichtdicken der Einzelschichten mit sehr viel höherer Genauigkeit als bisher bestimmt werden, da zum einen die in den unterschiedlichen Schichten durch die interne Strukturstreuung hervorgerufenen multiplen Streuereignisse korrekt berechnet werden können und die Genauigkeit zum anderen durch die Bestimmung des korrigierten Absorptionskoeffizienten µₐₖ weiter erhöht wird. Somit ist es möglich, die Farbwirkung für Mehrschichtsysteme so genau vorherzubestimmen, dass keine visuellen Unterschiede mehr wahrgenommen werden. Damit kann bei bekanntem Materialverhallen schon vor der Herstellung eines Mehrschichtsystems dessen Farbwirkung für wählbare Schichtdickenzusammensetzungen präzise vorhergesagt werden. Außerdem kann die Messgeometrie berücksichtigt werden und somit auch das Ergebnis von schichtdickenabhängigen Messungen in unterschiedlichen Spektrometern, beispielsweise von Remissionsmessungen in Farbspektrometem vorhergesagt werden.

Besonders geeignet ist das Verfahren für die Anwendung bei Mehrschichtsystemen in der Zahnmedizin für die Ermittlung der Farbe von dentalen Restaurationsmaterialien und Zahnfarbe, bei denen aufgrund der zu unterscheidenden sehr feinen Farbabstufungen von beispielsweise rötlichem, gelblichem oder gräulichem Weiß eine besonders hohe Genauigkeit erforderlich ist. Sowohl Zähne, als auch Zahnersatzmaterialien zeigen einen Schichtaufbau und Komplexe innere Streugeometrien aufgrund ihrer strukturellen Zusammensetzung. Zähne bestehen aus den Zahnhartsubstanzen Schmelz und Dentin mit Prismen- bzw. röhrchenartiger Tubulistruktur, Zahnersatzmaterialien werden zur Nachahmung des resultierenden optischen Eindrucks für eine optimale Ästhetik ebenfalls aus Schichten unterschiedlicher Opazität zusammengesetzt mit einem komplexen Aufbau aus in einer Matrix eingelagerten Füllkörpern unterschiedlichster Art und Formen.

Das beschriebene Verfahren, das sich dadurch auszeichnet, dass die Berechnung der Remission für Mehrschichtsysteme mit hintereinander liegenden unterschiedlichen Materialschichten wählbarer Schichtdicke und Eigenschaften mittels Monte-Carlo-Simulationen auf Basis der intrinsischen optischen Parameter mit einem korrigierten Absorptionskoeffizient µₐₖ, Streukoeffizient µₛ und Anisotropiefaktor g sowie des Brechungsindex n und der Einbeziehung der Streuphasenfunktion zur Berücksichtigung der internen Vielfachmaterialstreuung erfolgt, ist jedoch auf alle anderen Mehrschichtsysteme mit Strukturstreuung, sowohl im Bereich biologischer als auch technischer oder anderer Systeme anwendbar. Dabei kann auch die Farbwirkung von z. B. nicht in einer geraden sondern in einer gekrümmten Ebene verlaufenden Schichten berechnet bzw. vorhergesagt werden.

Weitere Einzelheiten, Vorteile und Merkmale der Erfindung ergeben sich aus den Ansprüchen, den diesen zu entnehmenden Merkmalen -für sich und/oder in Kombination -, sondern auch aus der nachfolgenden Beschreibung von der Zeichnung zu entnehmenden Ausführungsbeispielen.
Es zeigen:
- Fig. 1: eine schematische Darstellung eines Lichtwegs nach Oberflächenreflexion an einer Materialschicht,
- Fig. 2: schematische Darstellungen von Lichtwegen in Materialschichten,
- Fig. 3: eine Prinzipdarstellung eines Probenraums mit Ulbricht-Kugel,
- Fig. 4: ein Ablaufdiagramm zur Berechnung intrinsischer optischer Parameter,
- Fig. 5: ein Ablaufdiagramm zur inversen Monte-Carlo-Simulation und
- Fig. 6: ein Ablaufdiagramm zur Berechnung der Remission und nachfolgend der Farbwirkung eines Mehrschichtsystems.

Um die Farbwirkung von streuenden Schichten unterschiedlicher Materialien auf der Basis von Remissionsspektren zu bestimmen, werden erfindungsgemäß intrinsische (mikroskopische) optische Parameter Absorptionskoeffizient µₐ, Streukoeffizient µₛ, Anisotropiefaktor g der Materialien ermittelt - sei es aufgrund von Berechnungen auf der Basis von experimentell ermittelten makroskopischen optischen Parametern, sei es unter Berücksichtigung von von Datenbanken zu entnehmenden Werten -, auf deren Basis Monte-Carlo-Simulationen durchgeführt werden. Bei der Monte-Carlo-Simulation handelt es sich um ein für die Lösung von Gleichungssystemen und statistischen Prozessen angewendetes numerisches Verfahren mit hoher Genauigkeit.

So können mittels einer inversen Monte-Carlo-Simulation mit Hilfe einer z. B. von Roggan entwickelten Simulationssoftware WinFit 32, Version 5.2. intrinsische optische Parameter auf der Basis gemessener makroskopischer optischer Parameter berechnet werden. Zur Messung der makroskopischen optischen Parameter kann ein Ulbricht-Kugel-Spektrometer in Form eines Zweistrahl-Spektrometers benutzt werden, wie dies prinzipiell der Fig. 3 zu entnehmen ist.

So ist in Fig. 3 ein Probenraum 10 dargestellt, in dem eine Ulbricht-Kugel 12 angeordnet ist. Ferner sind Referenzstrahl 14 und Probenstrahl 16 eingezeichnet. Der Referenzstrahl 14 wird über Spiegel S3', S4' und S5' in die Ulbricht-Kugel 12 zur Kalibrierung auf einen Referenzstandard 18 geführt. Ulbricht-Kugel 12 und Referenzstandard 18 können aus Spektralon bestehen, wodurch eine 99,8 % ige Reflexion des Lichts für eine nahezu verlustfreie Detektion der Photonen ermöglicht wird.

Der Probenstrahl 16 gelangt über Spiegel S1' und S2' nach Durchgang durch eine wählbare strahlenfokussierende optische Linse 20 auf eine nicht dargestellte Probe einer Dicke d und in die Ulbricht-Kugel 12. Durch die automatisch bei jedem Messwert nacheinander folgende Abgabe von Probenstrahl 16 und Referenzstrahl 14 wird eine Normierung der Mcsswcrte durchgeführt. Daraus resultiert die Bezeichnung Zweistrahl-Spektrometer.

Die Probe wird im Probenhalter entweder am Transmissionsport 22 oder am Remissionsport 24 der Ulbricht-Kugel 12 befestigt, je nachdem, ob Vorwärts- oder Rückwärts-Streuung gemessen werden soll. Die jeweils gewählte optische Linse 20 regelt die Fokussierung des Lichtspots auf Transmissions- und Remissionsport 22, 24.

Mit einer entsprechenden Anordnung können sodann die makroskopischen optischen Parameter diffuse Remission R_{d}, diffuse Transmission T_{d} und totale Transmission Tₜ gemessen werden. Alternativ kann bei Verwendung eines anderen entsprechend aufgebauten Ulbricht-Kugel-Spektrometers - oder einem experimentellen Aufbau mit Ulbricht-Kugel - neben R_{d} und Tₜ statt der diffusen Transmission T_{d} auch die kollimierte Transmission T_{c} gemessen werden. Die entsprechenden makroskopischen optischen Parameter sind wie folgt definiert. Beim Auftreffen eines Lichtstrahls bildet sich eine für das jeweilige Medium spezifische Verteilung der Photonen im Bestrahlungsvolumen aus. Ein Teil der Strahlung wird absorbiert. Ein weiterer Teil der Photonen wird im Medium gestreut. Diese Streuung kann unterteilt werden in Rückstreuung als diffuse Remission R_{d} und in Vorwärtsstreuung als diffuse Transmission T_{d}. Bei geringer Schichtdicke werden auch Photonen ohne vorherige Streuereignisse als kollimierte Transmission T_{c} transmittiert. Die Summe aus kollimierter und diffuser Transmission ergibt die totale Transmission Tₜ (T_{d} + T_{c} = Tₜ). Diese makroskopischen Parameter sind wellenlängen-, material- und schichtdickenabhängig.

Für Materialien, die in Schichtsystemen zum Einsatz gelangen, werden entsprechende makroskopische optische Parameter bestimmt. Aus den makroskopischen optischen Parametern diffuser Remission R_{d}, diffuser Transmission T_{d} und/oder totaler Transmission T, und/oder kollimierter Transmission T_{c} - zwei von den Transmissionsparametern müssen bekannt sein (T_{d} + T_{c} = Tₜ) - werden sodann durch inverse Monte-Carlo-Simulation die intrinsischen optischen Parameter des Materials bestimmt, und zwar Absorptionskoeffizient µₐ, Streukoeffizient µₛ und Anisotropiefaktor g. Dabei werden bei der inversen Monte-Carlo-Simulation zusätzlich Streuphasenfunktion des Materials, Probendicke d des Materials, Brechungsindex n des Materials und Messgeometrie berücksichtigt.

Messgeometrie bedeutet bei der Verwendung eines Ulbricht-Kugel-Spektrometers z. B. Probengeometrie, Blendendurchmesser, Kugelparameter, Strahlendivergenz und Durchmesser des Lichtspots. Mit anderen Worten werden die bei der Messung vorhandenen geometrischen und optischen Verhältnisse in der Simulation berücksichtigt, so dass systematisch Fehler vermieden werden und die Genauigkeit der Simulation erhöht wird. Insbesondere können durch die Berücksichtigung der Messgeometrie z. B. auch seitliche Verluste von Photonen an Probengrenzflächen mit einbezogen werden.

Eine eindeutige Bestimmung der intrinsischen optischen Parameter erfordert die Messung von drei unabhängigen Werten wie R_{d}, Tₜ und T_{c} bzw. T_{d}.

Als Streuphasenfunktion kann die Henyey-Greenstein-Phasenfunktion oder die Reynolds-McCormick-Phasenfunktion verwendet werden. Andere geeignete Streuphasenfunktionen, die für das jeweilige Material typisch sind, können gleichfalls in Betracht gezogen werden.

Die Streuphasenfunktion kann neben einer mathematischen Formel auch aus einer "look up table" bestehen, also Bestimmung der Streuwahrscheinlichkeit über den Winkel zwischen der Richtung des Photons zum Streuereignis und der Richtung nach dem Streuereignis. Damit kann für jedes Material eine passende Streuphasenfunktion bestimmt werden. Dabei kann eine Streuphasenfunktion durchaus für mehrere Materialien passen, also nicht eindeutig auf ein Material beschränkt sein. Die Heney Greenstein-Funktion wird beispielsweise gerne für eine Vielzahl biologischer Gewebe verwendet. Wenn g besonders hoch ist, kann es jedoch von Vorteil sein, die Reynolds-McCormick-Funktion zu verwenden.

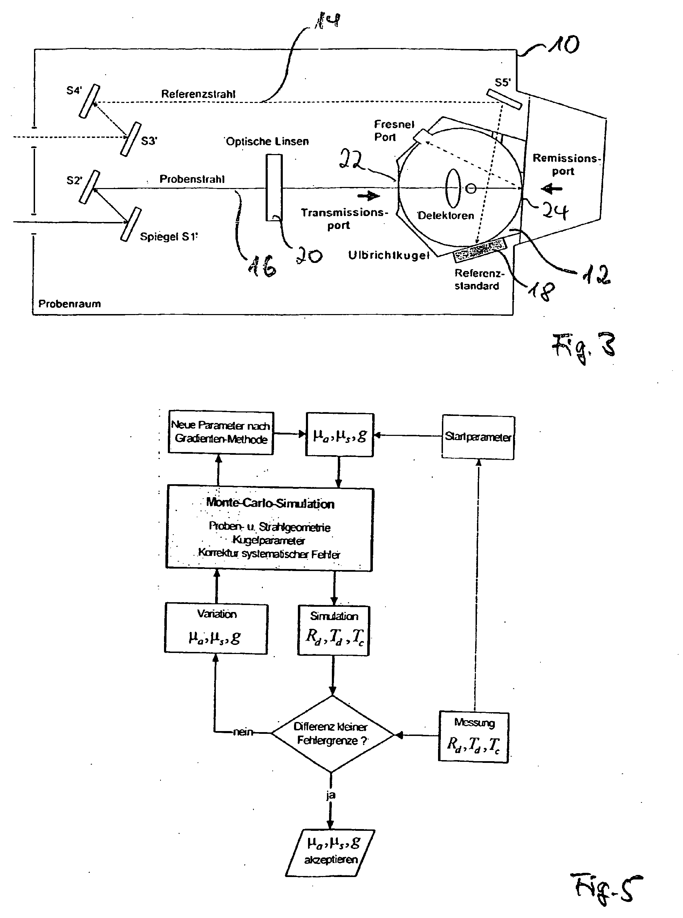

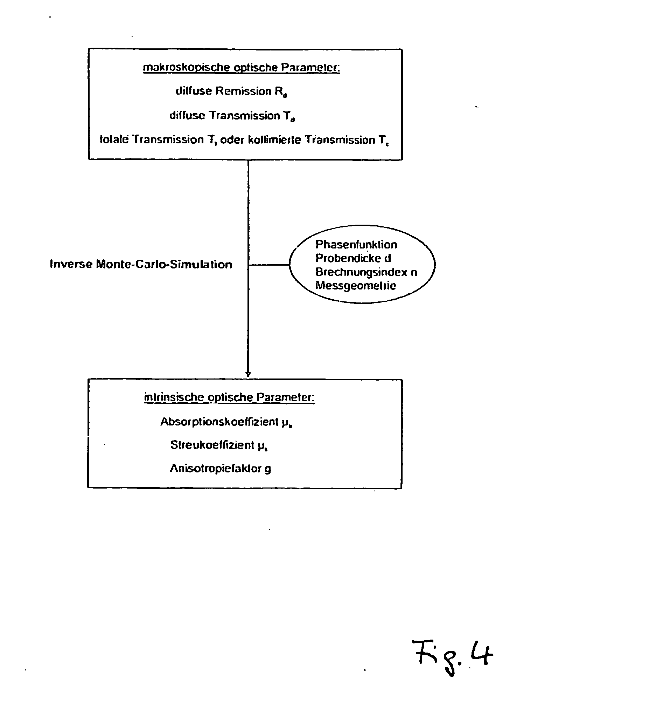

Die inverse Monte-Carlo-Simulation ist noch einmal der Fig. 5 zu entnehmen. Prinzipiell arbeitet die inverse Monte-Carlo-Simulation derart, dass von intrinsischen optischen Parameterwerten ausgegangen wird, die sodann auf die gemessenen oder zur Verfügung gestellten makroskopischen optischen Parameter zurückgerechnet werden. Ergibt sich sodann eine Differenz kleiner als eine Fehlergrenze, so werden die zu Grunde gelegten intrinsischen optischen Parameter akzeptiert.

Entsprechend können für in Frage kommenden Materialien die intrinsischen optischen Parameter bestimmt werden.

Soll zum Beispiel die Remission und damit die Farbwirkung eines drei unterschiedliche Materialschichten 2, 3, 4 umfassenden Systems gemäß der Fig. 2 bestimmt, d. h. vorausgesagt werden, werden die intrinsischen optischen Parameter eines jeden Materials sodann einer Vorwärts-Monte-Carlo-Simulation zugrunde gelegt. Ferner werden bei dieser Simulation die Messgeometrien sowie für jedes Material jeweils die Streuphasenfunktion der Materialien und der Brechungsindex n der Materialien berücksichtigt. Ferner gehen die Dicken d₁, d₂, d₃ der Schichten 2, 3, 4 ein. Die Dicke einer jeden Schicht an sich ist dabei konstant.

Aus der Vorwärts-Monte-Carlo-Simulation ergibt sich sodann eine wellenlängenabhängige Remission, aus der durch geeignete Rechenalgorithmen oder Multifaktorenanalyse die Farbwirkung, also Farbwerte nach gewähltem Farbsystem wie CIELAB berechnet werden.

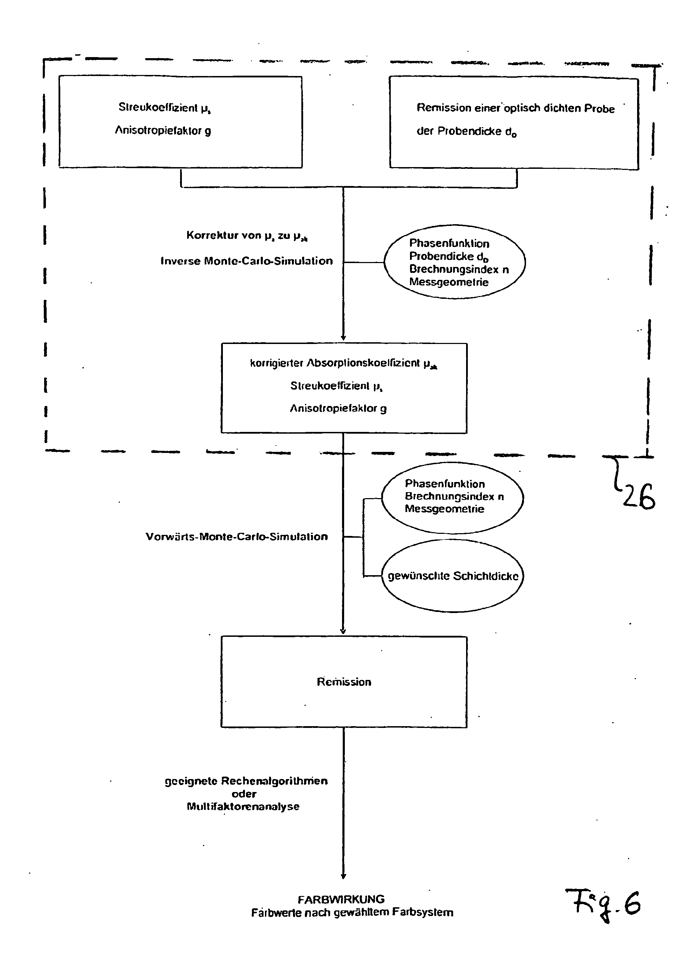

Um eine höhere Genauigkeit zu erzielen, ist erfindungsgemäß vorgesehen, dass der Absorptionskoeffizient korrigiert wird; denn bei den gemäß Fig. 3 durchgeführten Messungen müssen die Proben eine Dicke aufweisen, die eine Transmission von Licht ermöglicht. Die Absorption kann jedoch umso genauer bestimmt werden, je größer die Dicke einer Schicht ist. Daher werden der Streukoeffizient µₛ und der Anisotropiefaktor g, die mittels inverser Monte-Carlo-Simulation entsprechend der Fig. 4 und 5 berechnet worden sind, sowie die Remission einer optisch dichten Probe der Probendicke d_{D} einer weiteren inversen Monte-Carlo-Simulation zugrunde gelegt, aufgrund der nunmehr ein korrigierter Absorptionskoeffizient µₐₖ ermittelt wird. Bei der Simulation werden ebenfalls Streuphusenfunktionen des Materials, Probendicke d_{D}, Brechungsindex n des Materials sowie die Messgeometrie berücksichtigt. Dies ergibt sich aus dem oberen Teil der Fig. 6.

Für ein Mehrschichtsystem wird infoldgedessen die im Bereich 26 des Ablaufdiagramms gemäß Fig. 6 prinzipiell dargestellte Berechnung entsprechend der Anzahl der Schichten bzw. unterschiedlichen Materialien durchgeführt, um sodann gemäß zuvor erfolgter Erläuterungen auf der Basis der entsprechenden materiaispezifischen intrinsischen optischen Parameter, also korrigierter Absorptionskoeffizient µₐₖ, Streukoeffizient µₛ und Anisotropiefaktor g der Materialien die Remission des Schichtsystems durch Vorwärts-Monte-Carlo-Simulation zu berechnen, wobei von den verschiedenen Materialien deren Streuphasenfunktion, Brechungsindizes nₓ sowie Schichtdicken dₓ, und Anzahl x der Schichten berücksichtigt werden, gegebenenfalls ergänzend die Messgeometrie.

Somit wird die Remission des Gesamtsystems aller Schichten in ihrer geometrischen Abfolge berechnet, so dass erwähntermaßen die Phasenfunktionen und Brechungsindizes der Materialien der Schichten gewünschter Schichtdicken und Anzahl der Schichten zu berücksichtigen sind. Die Farbwirkung ergibt sich sodann aus der Remission nach z. B. DIN 5033 Farbmessung Teil 1 - 9, Beuth Verlag Berlin, 1979 - 1992.

### Liste der Bezugszeichen

- 1: Lichtweg
- 1': alternativer Lichtweg
- 2: erste Materialschicht
- 3: zweite Materialschicht
- 4: dritte Materialschicht
- 10: Probenraum
- 12: Ulbricht-Kugel
- 14: Referenzstrahl
- 16: Probenstrahl
- 15', 52', 53', 54', 55': Spiegel
- 18: Referenzstandard
- 20: Linse
- 22: Transmissionsport
- 24: Remissionsport
- 26: Bereich der Fig. 6
- ΔE_{ab}: Farbabstand nach CIELAB
- µₐ: Absorptionskoeffizient
- µₐₖ: korrigierter Absorptionskoeffizient
- µₛ: Streukoeffizient
- A_{KM}: Kubelka-Munk-Absorptionskoeffizient
- d, d₁, d₂, d₃: Probendicke
- d_{D}: Probendicke einer optisch dichten Probe
- g: Anisotropiefaktor
- n: Brechungsindex
- R_{d}: diffuse Remission
- S_{KM}: Kubelka-Munk-Streukoeffizient
- T_{c}: kollimierte Transmission
- T_{d}: diffuse-Transmission
- Tₜ: totale Transmission

## Patentansprüche

1. Verfahren zur Bestimmung der Farbwirkung von streuenden Materialien, wie Werkstoffen oder biologischen Substanzen eines Mehrschichtsystems, insbesondere einer Schichtabfolge in Zähnen oder dentalen Werkstoffen, wobei die Remission des Mehrschichtsystems durch Vorwärts-Monte-Carlo-Simulation von durch inverse Monte-Carlo-Simulation berechneten intrinsischen optischen Parametern Streukoeffizient µₛ, Anisotropiefaktor g und Absorptionskoeffizient der unterschiedlichen Materialien unter Berücksichtigung von Brechungsindex n, Dicke d der jeweiligen Schicht der Materialien sowie Streuphasenfunktion der einzelnen Materialien berechnet und aus der Remission die Farbwirkung ermittelt wird,
**dadurch gekennzeichnet,**
**dass** zunächst die intrinsischen Parameter Streukoeffizient µₛ, Anisotropiefaktor g und Absorptionskoeffizient des jeweiligen Materials unter Zugrundelegung einer Transmission von Licht ermöglichenden Schichtdicke des Materials berechnet werden und sodann durch inverse Monte-Carlo-Simulation ein korrigierter Absorptionskoeffizient µₐₖ unter Zugrundelegung der Remission des jeweiligen Materials einer optisch dichten Schicht einer Dicke d_{D} berechnet wird, wobei der korrigierte Absorptionskoeffizient µₐₖ als der Absorptionskoeffizient der Berechnung der Remission und der Farbwirkung des Mehrschichtsystems zu Grunde gelegt wird.

2. Verfahren nach Anspruch 1,
**dadurch gekennzeichnet,**
**dass** die intrinsischen optischen Parameter auf Basis von spektrometrischen Messungen ermittelt werden.

3. Verfahren nach Anspruch 1,
**dadurch gekennzeichnet,**
**dass** die intrinsischen optischen Parameter aus einer Datenbank entnommen werden.

4. Verfahren nach zumindest Anspruch 1,
**dadurch gekennzeichnet,**
**dass** die intrinsischen optischen Parameter Streukoeffizient µₛ, unkorrigierter Absorptionskoeffizient µₐ sowie Anisotropiefaktor g eines Materials auf der Basis der makroskopischen optischen Parameter des Materials in Form von diffuser Remission R_{d} sowie diffuser Transmission T_{d} und/oder totaler Transmission Tₜ und/oder kollimierter Transmission T_{c} unter Berücksichtigung der Streuphasenfunktion des Materials, Dicke d einer bei der Bestimmung der makroskopischen Parameter verwendeten Schicht des Materials und Brechungsindex n des Materials mittels inverser Monte-Carlo-Simulation berechnet werden.

5. Verfahren nach zumindest Anspruch 1,
**dadurch gekennzeichnet,**
**dass** für das aus unterschiedlichen Materialien bestehende Schichtsystem auf der Basis des korrigierten Absorptionskoeffizienten µₐₖ, des Streukoeffizienten µₛ und des Anisotropiefaktors g eines jeden Materials unter Berücksichtigung von zumindest der Streuphasenfunktion, des Brechungsindex n und Dicke d jeder Schicht sowie Schichtreihenfolge mittels Vorwärts-Monte-Carlo-Simulation die Remission des Schichtsystems berechnet wird.

6. Verfahren nach zumindest einem der vorhergehenden Ansprüche,
**dadurch gekennzeichnet,**
**dass** bei der Berechnung der intrinsischen optischen Parameter mittels der inversen Monte-Carlo-Simulation Messparameter und/oder Messgeometrien aus der experimentellen Bestimmung der makroskopischen optischen Parameter berücksichtigt werden.

7. **Verfahren nach Anspruch 1,**
**dadurch gekennzeichnet,**
**dass** die Berechnung der Farbwirkung aus der Remission mittels Algorithmen oder Multifaktorenanalyse erfolgt.

8. Verfahren nach Anspruch 1,
**dadurch gekennzeichnet,**
**dass** die Berechnung der Farbwirkung unter Berücksichtigung geometrischer Erstreckung wie Krümmung des Schichtsystems erfolgt.

9. Verfahren nach Anspruch 6,
**dadurch gekennzeichnet,**
**dass** bei Verwendung eines Ulbricht-Kugel-Spektrometers als Messgeometrie Probengeometrie, Blendendurchmesser, Kugelparameter, Strahlendivergenz oder Durchmesser eines Lichtspots zu Grunde gelegt wird.

## Claims

1. A method for determining the color effect of dispersive materials such as materials or biological substances of a multilayer system, in particular a series of layers in teeth or dental materials, wherein the remission of the multilayer system is calculated by means of forward Monte Carlo simulation of intrinsic optical parameters dispersion coefficient µₛ, anisotropy factor g and absorption coefficient of the different materials, calculated by inverse Monte Carlo simulation, taking into consideration refractive index n, thickness d of the respective layer of the materials as well as dispersion phase function of the individual materials and the color effect determined from the remission,
**characterized in**
**that** the intrinsic parameters dispersion coefficient µₛ, anisotropy factor g and absorption coefficient of the respective material are first calculated on the basis of a layer thickness of material enabling transmission of light and that a corrected absorption coefficient µₐₖ is then calculated by inverse Monte Carlo simulation on the basis of the remission of the respective material of an optically dense layer having a thickness d_{D}, the corrected absorption coefficient µₐₖ as the absorption coefficient forming the basis for calculating the remission and the color effect of the multilayer system.

2. The method according to claim 1,
**characterized in**
**that** the intrinsic optical parameters are determined on the basis of spectrometric measurements.

3. The method according to claim 1,
**characterized in**
**that** the intrinsic optical parameters are taken from a data bank.

4. The method according to at least claim 1,
**characterized in**
**that** the intrinsic optical parameters dispersion coefficient µₛ, uncorrected absorption coefficient µₐ and anisotropy factor g of a material are calculated on the basis of macroscopic optical parameters of the material in the form of diffuse remission R_{d} as well as diffuse transmission T_{d} and/or total transmission Tₜ and/or collimated transmission T_{c}, taking into consideration the dispersion phase function of the material, thickness d of a layer of the material used during determination of the macroscopic parameters and refractive index n of the material by means of inverse Monte Carlo simulation.

5. The method according to at least claim 1,
**characterized in**
**that** the remission of the layer system is calculated for the series of layers consisting of different materials on the basis of the corrected absorption coefficient µₐₖ, the dispersion coefficient µₛ and the anisotropy factor g of each material, taking into consideration at least the dispersion phase function, the refractive index n and thickness d of each layer and series of layers by means of forward Monte Carlo simulation.

6. The method according to at least one of the preceding claims,
**characterized in**
**that**, when calculating the intrinsic optical parameters by means of the inverse Monte Carlo simulation, measurement parameters and/or measurement geometries from the experimental determination of the macroscopic optical parameters are taken into consideration.

7. The method according to claim 1,
**characterized in**
**that** the calculation of the color effect from the remission takes place by means of algorithms or multifactor analysis.

8. The method according to claim 1,
**characterized in**
**that** the color effect is calculated taking the geometric extension such as curvature of the layer system into consideration.

9. The method according to claim 6,
**characterized in**
**that**, when using an Ulbricht sphere-type spectrometer as measurement geometry, test geometry, diaphragm diameter, sphere parameter, beam divergence or diameter of a light spot are used as a basis.

## Revendications

1. Procédé pour déterminer l'effet de couleurs de matières de dispersion telles que des matériaux ou des substances biologiques d'un système multicouches, notamment d'une succession de couches dans des dents ou des matières dentaires,
selon lequel
on calcule la luminance de réflexion du système multicouches par une simulation directe de Monte-Carlo de paramètres optiques intrinsèques calculés par simulation inverse de Monte-Carlo, coefficient de dispersion µₛ, coefficient d'anisotropie (g) et coefficient d'absorption des différentes matières en tenant compte de l'indice de réfraction (n), épaisseur (d) de la couche respective de matière et fonction de dispersion de phase des différentes matières, et on détermine l'effet de couleurs à partir de la luminance de réflexion,
**caractérisé en ce qu'**
on calcule d'abord les paramètres intrinsèques coefficient dispersion µₛ, coefficient d'anisotropie (g) et coefficient d'absorption de la matière respective en se fondant sur une épaisseur de couches de matière permettant une transmission de lumière et ensuite on calcule par simulation inverse de Monte-Carlo, un coefficient d'absorption corrigé µₐₖ en se fondant sur la luminance de réflexion de la matière respective d'une couche optique dense d'une épaisseur d_{D}, le coefficient d'absorption corrigé µₐₖ étant utilisé comme coefficient d'absorption pour calculer la luminance de réflexion et l'effet de couleurs du système multicouches.

2. Procédé selon la revendication 1,
**caractérisé en ce qu'**
on détermine les paramètres optiques intrinsèques en s'appuyant sur des mesures spectrométriques.

3. Procédé selon la revendication 1,
**caractérisé en ce qu'**
on prend les paramètres optiques intrinsèques dans une banque de données.

4. Procédé selon au moins la revendication 1,
**caractérisé en ce qu'**
on calcule par simulation inverse de Monte-Carlo, les paramètres optiques intrinsèques coefficient de dispersion µₛ, coefficient d'absorption non corrigé µₐ et coefficient d'anisotropie (g) d'une matière en se fondant sur les paramètres optiques macroscopiques de la matière sous la forme d'une luminance de réflexion diffuse R_{d} et d'une transmission diffuse T_{d} et/ou d'une transmission totale Tₜ et/ou d'une transmission colimatée T_{c} en tenant compte de la fonction de dispersion de phase de la matière, de l'épaisseur (d) d'une couche de matière utilisée pour déterminer les paramètres macroscopiques et de l'indice de réfraction (n) de la matière.

5. Procédé selon au moins la revendication 1,
**caractérisé en ce que**
pour le système multicouches formées de différentes matières on calcule la luminance de réflexion du système de couches par simulation directe de Monte-Carlo en se fondant sur le coefficient d'absorption corrigé µₐₖ, le coefficient de dispersion µₛ et le coefficient d'anisotropie (g) de chaque matière en tenant compte d'au moins une fonction de dispersion de phase, de l'indice de réfraction (n) et de l'épaisseur (d) de chaque couche ainsi que de la succession de l'ordre des couches.

6. Procédé selon au moins l'une des revendications précédentes,
**caractérisé en ce que**
pour le calcul des paramètres optiques intrinsèques à l'aide de la simulation inverse de Monte-Carlo, on tient compte de paramètres de mesure et/ou de géométries de mesure à partir de la détermination expérimentale de paramètres optiques macroscopiques.

7. Procédé selon la revendication 1,
**caractérisé en ce qu'**
on calcule l'effet de couleurs à partir de la luminance de réflexion en appliquant des algorithmes ou une analyse à facteurs multiples.

8. Procédé selon la revendication 1,
**caractérisé en ce que**
le calcul de l'effet de couleurs se fait en tenant compte de l'extension géométrique et de la courbure du système de couches.

9. Procédé selon la revendication 6,
**caractérisé en ce que**
pour l'utilisation d'un spectromètre à sphère d'Ulbricht on utilise un point lumineux comme géométrie de mesure, géométrie d'échantillon, diamètre de diaphragme, paramètre de sphère, divergence de rayon ou diamètre.
